# FASCICULE DE BREVET EUROPEEN

(11) **EP 1 169 660 B1**
(45) Date de publication et mention de la délivrance du brevet: **10.12.2003**
(21) Numéro de dépôt: 00915285.1
(22) Date de dépôt: 05.04.2000
(51) Int. Cl.: G02B 7/04, G01N 21/91

(54) **PROCEDE DE DETERMINATION DE L'APTITUDE A LA COLORATION SANS DEFAUT D'UN ARTICLE MOULE TRANSPARENT EN MATERIAU POLYMERE ET ARTICLE OBTENU**
VERFAHREN ZUR BESTIMMUNG DER EIGNUNG EINES TRANSPARENTEN GIESSARTIKELS AUS POLYMERMATERIAL ZUR FEHLERFREIEN FÄRBUNG UND DURCH DIESES VERFAHREN ERHALTENER ARTIKEL
METHOD FOR DETERMINING THE FLAWLESS COLORABILITY OF A TRANSPARENT MOLDED OBJECT MADE FROM A POLYMER MATERIAL AND ARTICLE THUS OBTAINED

(30) Priorité: 06.04.1999 FR 9904268
(43) Date de publication de la demande: 09.01.2002
(73) Titulaire: ESSILOR INTERNATIONAL COMPAGNIE GENERALE D'OPTIQUE, 94227 Charenton cédex (FR)
(72) Inventeur: MASSEY, Gilles, F-94100 Saint-Maur (FR); DAUGUET, Jean-Claude, F-94440 Marolles en Brie (FR)
(74) Mandataire: Catherine, Alain
(86) Numéro de dépôt international: FR0000842
(87) Numéro de publication internationale: WO00060395

(56) Documents cités:
- EP-A- 0 838 850
- US-A- 4 241 102
- US-A- 4 303 701
- US-A- 4 695 399
- US-A- 5 201 921

## Description

La présente invention concerne de manière générale un procédé pour déterminer à priori si un article moulé transparent, non coloré, en matériau polymère, tel qu'une lentille ophtalmique, est apte à être coloré sans défaut.

A l'heure actuelle, les lentilles ophtalmiques en matériau polymère (verre organique) sont commercialisées sous deux formes, à savoir sous forme de lentilles ophtalmiques non colorées (lentilles en verre organique blanc) et sous forme de lentilles ophtalmiques colorées de teinte plus ou moins foncée (lentilles en verre organique coloré).

Généralement, la coloration des lentilles ophtalmiques s'effectue en immergeant la lentille non colorée en verre blanc dans un bain de coloration aqueux, dans lequel sont dispersés les pigments, et maintenu à une température de l'ordre de 90°C.

A la suite de ce traitement, certaines lentilles ophtalmiques bien que tout à fait utilisables à l'état non coloré, peuvent présenter des défauts de coloration, principalement des inhomogénéités de coloration se présentant sous la forme de fougères, cercles ou arches qui rendent la commercialisation de la lentille colorée impossible. Ces lentilles ophtalmiques colorées défectueuses, non récupérables, doivent alors être mises au rebut.

De tels défauts de coloration concernent particulièrement des lentilles ophtalmiques obtenues à partir de compositions polymérisables présentant un retrait important lors de la polymérisation dans le moule, généralement égal ou supérieur à 7%, de préférence égal ou supérieur à 10%, comme par exemple les lentilles obtenues par polymérisation d'une composition liquide polymérisable comprenant un monomère diallyl carbonate de diéthylène glycol (CR 39®).

Ces défauts de coloration concernent également plus spécifiquement les lentilles ophtalmiques de puissance positive.

Le brevet US-A-4 303 701 décrit un procédé de marquage de lentilles en matière plastique par imprégnation d'un matériau fluorescent dans la surface de la lentille de sorte que, lorsque la lentille est exposée à la lumière ultra-violette, elle devient fluorescente permettant ainsi de sélectivement identifier la lentille. Plus précisément, le procédé décrit dans le brevet US-A-4 303 701 consiste tout d'abord à sélectionner parmi des lentilles présentant deux niveaux de qualité, les lentilles ayant le plus haut niveau de qualité et à marquer les lentilles de plus haut niveau de qualité sélectionnées par imprégnation avec un matériau fluorescent pour pouvoir ultérieurement les identifier. Ce procédé exige donc une étape de tri préalable des lentilles en fonction de la qualité, étape qui d'ailleurs n'est pas définie dans le brevet.

Le brevet EP-A-838850 décrit un procédé permettant de visualiser les défauts de surface d'un substrat. Le procédé consiste à déposer une couche monomoléculaire d'un agent fluorescent à la surface du substrat, puis à visualiser les défauts à la surface du substrat à partir des points lumineux dus à la dispersion de la lumière au niveau des défauts. Ce procédé est particulièrement adapté à la détermination de défauts de surface de substrats semi-conducteurs.

Il serait donc souhaitable de disposer d'un procédé permettant de déterminer à priori au sein d'un ensemble d'articles moulés transparents en verre organique blanc, en particulier des lentilles ophtalmiques, ceux qui sont aptes à une coloration sans défaut. Ainsi, on éviterait un taux de déchets importants parmi les articles moulés transparents en verre organique blanc lors de leur coloration, les articles moulés transparents en verre organique blanc non retenus, en particulier les lentilles ophtalmiques, étant de qualité suffisante pour être utilisés dans leur état non coloré.

Selon l'invention, on a trouvé qu'il était possible de déterminer à priori, avant tout traitement de coloration, parmi un ensemble d'articles moulés transparents en matériau polymère incolore, si ces articles pouvaient être colorés sans risque d'apparition de défauts de coloration tels que des fougères, en mettant en contact au moins une surface principale de l'article incolore avec une solution d'un matériau fluorescent dans des conditions telles que le matériau fluorescent pénètre sous la surface principale dans l'article et en irradiant l'article imprégné avec un rayonnement activant la fluorescence du matériau fluorescent. L'irradiation de l'article imprégné a pour résultat de faire apparaître, s'ils existent, des défauts correspondants à ceux qui apparaîtraient lors d'un traitement de coloration ultérieur. Par suite, à ce stade, il est donc possible d'effectuer un tri entre des articles aptes à une coloration sans défaut et des articles inaptes. On peut alors ne soumettre à des traitements de coloration ultérieurs que les articles aptes sélectionnés et conserver les articles non retenus pour des applications ne nécessitant pas une coloration de ceux-ci.

L'invention a donc pour objet un procédé pour déterminer à priori l'aptitude d'articles moulés transparents, incolores, en matériau polymère, d'un ensemble de tels articles, à fournir après traitement de coloration des articles moulés, transparents, colorés, sans défauts de coloration, caractérisé en ce qu'il comprend :
a) la mise en contact d'au moins une surface principale des articles incolores de l'ensemble avec une solution d'un matériau fluorescent pendant une durée suffisante pour permettre une pénétration du matériau fluorescent sous la surface principale des articles;
b) l'irradiation des articles imprégnés au moyen d'un rayonnement activant la fluorescence du matériau fluorescent; et
c) le tri des articles de l'ensemble en deux sous-ensembles dont un premier est constitué par ceux des articles de l'ensemble qui présentent une fluorescence homogène de leurs surfaces principales sous l'irradiation et un deuxième est constitué par ceux des articles qui présentent une fluorescence non homogène de leurs surfaces principales sous l'irradiation.

Une fois le tri fait, on peut alors soumettre les articles du premier sous-ensemble qui présentent une fluorescence homogène sous irradiation à un traitement de coloration avec la quasi certitude qu'on obtiendra un article coloré sans défaut de coloration.

L'invention concerne également un procédé de fabrication de lentilles ophtalmiques en matériau polymère, colorées, caractérisé en ce qu'il comprend :
a) l'obtention d'un ensemble de lentilles ophtalmiques en matériau polymère incolore;
b) la mise en contact d'au moins une surface principale des lentilles ophtalmiques avec une solution d'un matériau fluorescent pendant une durée suffisante pour permettre une pénétration du matériau fluorescent sous la surface principale des lentilles ophtalmiques;
c) l'irradiation des lentilles ophtalmiques au moyen d'un rayonnement activant la fluorescence du matériau fluorescent;
d) le tri des lentilles ophtalmiques de l'ensemble en deux sous-ensembles dont un premier est constitué des lentilles ophtalmiques qui présentent une fluorescence homogène de leurs surfaces principales sous l'irradiation et un deuxième est constitué des lentilles ophtalmiques qui présentent une fluorescence non homogène de leurs surfaces principales sous irradiation; et
e) l'application aux lentilles ophtalmiques du premier sous-ensemble d'un traitement de coloration.

Dans une variante du procédé après le tri des articles, on peut les soumettre à un traitement de suppression de leur caractéristique de fluorescence. Un tel traitement peut consister en une irradiation des articles triés avec un rayonnement UV approprié, tel qu'un rayonnement UV-C, ou un traitement chimique tel qu'un trempage des articles dans un bain d'un agent de désactivation du matériau fluorescent. Le traitement de suppression de la caractéristique de fluorescence recommandé est le traitement chimique car le traitement par irradiation UV-C a tendance à conférer un léger jaunissement à l'article traité.

L'invention concerne encore un article moulé transparent, en matériau polymère, par exemple une lentille ophtalmique, comportant sous une de ses surfaces principales une mince couche imprégnée d'un matériau fluorescent désactivé. L'épaisseur de cette couche mince dépend de la profondeur d'imprégnation du matériau fluorescent, en général 0,1 à 5 µm, de préférence 0,5 à 1,5 µm.

La solution de matériau fluorescent du procédé de l'invention est de préférence une solution aqueuse et la concentration en matériau fluorescent est généralement comprise entre quelques parties par million et quelques dixièmes de pourcent, mieux entre 10 et 100 ppm, et typiquement de l'ordre de 20 ppm.

On peut utiliser pour la solution de matériau fluorescent du procédé de l'invention, tout matériau fluorescent connu pouvant être imprégné dans l'article. Parmi ceux-ci, on peut citer les dérivés d'hydrazines et d'amines aliphatiques et plus particulièrement la dansyl cadavérine ou la dansyl éthylène diamine.

Le matériau fluorescent aura en général une longueur d'onde d'absorption comprise entre 200 et 400 nm et une longueur d'onde d'émission comprise entre 400 et 700 nm. De préférence, la longueur d'onde d'absorption (excitation) du matériau fluorescent sera inférieure à 380 nm, mieux inférieure à 320 nm et encore mieux inférieure à 300 nm et sa longueur d'onde d'émission comprise entre 450 nm et 700 nm.

Un matériau fluorescent particulièrement recommandé est le 5-diméthylaminonaphtalène-1-[N-(5-aminopentyl)] sulfonamide de formule : 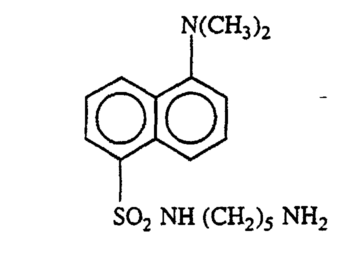 encore appelé dansyl cadavérine.

La mise en contact de l'article incolore avec la solution de matérieu fluorescent se fait de préférence par immersion de l'article dans la solution bien qu'il soit également possible de mettre en contact uniquement une surface principale de l'article avec la solution, par exemple par dépôt de la solution par centrifugation.

En général, la solution de matériau fluorescent pendant la mise en contact avec l'article est à une température supérieure à la température de transition vitreuse du matériau polymère de l'article (par exemple -83°C pour le matériau ORMA® de la Société ESSILOR) et est généralement comprise entre 85°C et 98°C, typiquement de l'ordre de 95°C.

La durée du traitement de l'article avec la solution de matériau fluorescent doit être suffisante pour que le matériau fluorescent pénètre sous la surface principale de l'article d'une profondeur suffisante, généralement de l'ordre de 0,1 à 5 µm et de préférence de 0,5 à 1,5 µm. Généralement, la durée du traitement sera de l'ordre de 10 à 30 secondes, typiquement de l'ordre de 20 secondes. Bien que l'on puisse utiliser des durées de traitement supérieures, on a trouvé qu'au-delà de 2 minutes de traitement avec la solution de matériau fluorescent, l'efficacité des traitements éventuels de désactivation du matériau fluorescent imprégné diminuait fortement.

L'étape b) d'irradiation des articles imprégnés de matériau fluorescent comprend l'irradiation des articles par tout rayonnement activant la fluorescence du matériau fluorescent imprégné et de préférence par un rayonnement UV de longueur d'onde correspondant aux longueurs d'onde d'absorption des matériaux fluorescents imprégnés. Ainsi, on utilisera de préférence un rayonnement UV d'excitation dont le spectre est centré autour de 350 nm.

Comme indiqué précédemment, le procédé de l'invention comprend de préférence une étape de désactivation du matériau fluorescent imprégné dans les articles triés.

Cette désactivation peut s'effectuer par exemple par irradiation de l'article avec un rayonnement UV-C (longueur d'onde - 250 nm) pendant environ 20 secondes ou par un traitement chimique tel qu'un traitement par immersion dans un bain d'un agent de désactivation.

Parmi les agents chimiques de désactivation, on peut citer l'alkyl sulfonate de benzène.

L'agent chimique de désactivation peut être un agent "carrier", c'est-à-dire activateur de transport. Il va, dans ce cas, permettre une diffusion accrue de l'agent fluorescent.

Sans vouloir se limiter à un mécanisme particulier, on peut penser qu'une partie de l'agent fluorescent sera relarguée (diffusion vers l'extérieur de la lentille) alors qu'une partie pénétrera en profondeur.

Lorsque la lentille comporte dans sa masse un absorbeur UV, l'agent fluorescent sera alors inactivé par l'absorbeur UV.

Les agents chimiques de désactivation sont en général utilisés sous forme de solution, en particulier aqueuse, à des concentrations de 1 à 5% en poids.

Le traitement de désactivation s'effectue généralement avec des solutions d'agents de désactivation à une température de 85 à 100°C, et ont une durée de l'ordre de 1 à 10 minutes selon l'agent de désactivation et la température de la solution.

Un exemple d'un tel bain est une solution aqueuse à 2% en poids d'un alkylsulfonate de benzène.

Dans le cas du bain à 2% d'un alkylsulfonate de benzène, on obtient une désactivation par trempage de l'article pendant 5 minutes dans le bain à 95°C.

Le matériau polymère transparent, incolore, des articles du procédé de l'invention, peuvent être tous matériaux polymères transparents, incolores, classiques, susceptibles d'être imprégnés par un matériau fluorescent.

De préférence, ces matériaux sont des matériaux polymères transparents, incolores, présentant un retrait important au moulage (polymérisation) généralement de 7% ou plus, et mieux de 10% ou plus.

Un matériau polymère préféré est le matériau obtenu par polymérisation d'une composition liquide polymérisable, comprenant un monomère diallyl carbonate de diéthylèneglycol (CR 39®) tel que des lentilles ophtalmiques ORMA® de la Société ESSILOR.

De préférence, les articles moulés transparents, incolores, en matériau polymère du procédé de l'invention, sont des articles ayant une puissance optique positive, en particulier des lentilles ophtalmiques ayant une puissance optique positive.

### EXEMPLES

Des lentilles ophtalmiques ORMA® obtenues par polymérisation thermique de bisallylcarbonate de diéthylène glycol dans un moule en verre minéral sont testées par le procédé de l'invention.

Le test de détection est effectué de la façon suivante :

Les lentilles sont immergées dans une solution aqueuse à 100°C de 5-diméthylaminonaphtalène-1-[N-(5-aminopentyl)] sulfonamide (dansyl cadavérine) à une concentration de 20 ppm, pendant 2 minutes 30 secondes.

Après retrait des lentilles de la solution, celles-ci sont rincées à l'eau froide et séchées à l'aide d'un chiffon doux.

Elles sont ensuite éclairées à l'aide d'une lampe ultraviolette dont le spectre est centré autour de 350 nm.

On trie alors les lentilles selon que l'on détecte ou non des hétérogénéités de fluorescence.

Sur 30 lentilles de puissance + 6,00 Dioptries, le test a détecté la présence de 21 défauts de type fougère ou cercle et 9 lentilles exemptes de défauts (présentant une fluorescence homogène).

Après coloration, les 9 lentilles sont bien exemptes de défauts, et 19 lentilles sur les 21 présentent des défauts de coloration.

Les deux autres lentilles qui présentaient des défauts (hétérogénéités) de fluorescence ne présentent pas de défauts de coloration.

En effet, l'intensité du défaut de fluorescence était faible pour ces deux lentilles. Le contraste de ce défaut après coloration n'est pas suffisant pour que l'on détecte celui-ci à l'oeil.

L'on peut être moins sélectif en diminuant, par exemple, la concentration en agent fluorescent dans le bain correspondant.

Sur 30 lentilles de puissance + 4,00 Dioptries, le test a détecté la présence de 12 défauts de type fougère ou cercle et 18 lentilles exemptes de défauts.

Après coloration, les mêmes proportions sont observées.

Sur 30 lentilles de puissance + 2,00 Dioptries, le test n'a pas détecté de fougères.

Après coloration, il n'y a pas de fougères non plus.

## Revendications

1. Procédé pour déterminer à priori l'aptitude d'articles moulés, transparents, incolores, en matériau polymère, susceptibles d'être imprégnés par un matériau fluorescent, d'un ensemble de tels articles, à fournir après traitement de coloration des articles moulés, transparents, colorés, sans défaut de coloration, **caractérisé en ce qu'**il comprend :
a) la mise en contact d'au moins une surface principale des articles incolores de l'ensemble avec une solution d'un matériau fluorescent pendant une durée suffisante pour permettre une pénétration du matériau fluorescent sous la surface principale des articles;
b) l'irradiation des articles imprégnés au moyen d'un rayonnement activant la fluorescence du matériau fluorescent; et
c) le tri des articles de l'ensemble en deux sous-ensembles dont un premier est constitué par ceux des articles de l'ensemble qui présentent une fluorescence homogène de leurs surfaces principales sous l'irradiation et un deuxième est constitué par ceux des articles qui présentent une fluorescence non homogène de leurs surfaces principales sous l'irradiation.

2. Procédé selon la revendication 1, **caractérisé en ce qu'**il comprend en outre :
d) un traitement de désactivation du caractère fluorescent des articles triés.

3. Procédé selon la revendication 2, **caractérisé en ce que** le traitement de désactivation consiste à irradier les articles triés avec un rayonnement UV-C.

4. Procédé selon la revendication 2, **caractérisé en ce que** le traitement de désactivation consiste à tremper les articles triés dans un bain d'un agent chimique de désactivation du matériau fluorescent.

5. Procédé selon la revendication 4, **caractérisé par le fait que** l'agent chimique de désactivation est un alkylsulfonate de benzène.

6. Procédé selon l'une quelconque des revendications précédentes, **caractérisé en ce que** dans l'étape a) le matériau fluorescent pénètre sous la surface principale des articles jusqu'à une profondeur de 0,1 à 5 µm, de préférence 0,5 à 1,5 µm.

7. Procédé selon l'une quelconque des revendications précédentes, **caractérisé en ce que** l'étape b) d'irradiation est une irradiation avec un rayonnement UV.

8. Procédé selon l'une quelconque des revendications précédentes, **caractérisé en ce que** la solution de matériau fluorescent est une solution aqueuse à une concentration de 10 à 100 ppm, de préférence d'environ 20 ppm.

9. Procédé selon l'une quelconque des revendications précédentes, **caractérisé en ce que** la solution de matériau fluorescent est à une température supérieure à la température de transition vitreuse du matériau polymère des articles.

10. Procédé selon la revendication 9, **caractérisé en ce que** la température de la solution de matériau fluorescent est de 85 à 98°C.

11. Procédé selon l'une quelconque des revendications précédentes, **caractérisé en ce que** le matériau polymère des articles présente un retrait de polymérisation d'au moins 7%, de préférence d'au moins 10%.

12. Procédé selon la revendication 11, **caractérisé en ce que** le matériau polymère des articles est obtenu par polymérisation d'une composition liquide polymérisable comprenant un monomère diallyl carbonate de diéthylène glycol.

13. Procédé selon l'une quelconque des revendications précédentes, **caractérisé en ce que** les articles moulés présentent une puissance optique positive.

14. Procédé selon l'une quelconque des revendications précédentes, **caractérisé en ce que** le matériau fluorescent est choisi parmi les dérivés d'hydrazines et d'amines aliphatiques.

15. Procédé selon l'une quelconque des revendications précédentes, **caractérisé en ce que** les articles moulés sont des lentilles ophtalmiques.

16. Procédé de fabrication de lentilles ophtalmiques en matériau polymère, susceptibles d'être imprégnées par un matériau fluorescent colorées, **caractérisé en ce qu'**il comprend :
a) l'obtention d'un ensemble de lentilles ophtalmiques en matériau polymère incolore;
b) la mise en contact d'au moins une surface principale des lentilles ophtalmiques avec une solution d'un matériau fluorescent pendant une durée suffisante pour permettre une pénétration du matériau fluorescent sous la surface principale des lentilles ophtalmiques;
c) l'irradiation des lentilles ophtalmiques au moyen d'un rayonnement activant la fluorescence du matériau fluorescent;
d) le tri des lentilles ophtalmiques de l'ensemble en deux sous-ensembles dont un premier est constitué des lentilles ophtalmiques qui présentent une fluorescence homogène de leurs surfaces principales sous l'irradiation et un deuxième est constitué des lentilles ophtalmiques qui présentent une fluorescence non homogène de leurs surfaces principales sous irradiation; et
e) l'application aux lentilles ophtalmiques du premier sous-ensemble d'un traitement de coloration.

17. Procédé de fabrication selon la revendication 16, **caractérisé en ce qu'**il comprend en outre après le tri des lentilles ophtalmiques et avant l'application du traitement de coloration, l'application d'un traitement de désactivation du matériau fluorescent des lentilles ophtalmiques triées.

18. Article moulé, transparent, en matériau polymère, apte à une coloration sans défaut comportant sous une surface principale une couche mince imprégnée d'un matériau fluorescent désactivé.

19. Article selon la revendication 18, **caractérisé en ce que** l'article est une lentille ophtalmique.

## Claims

1. Method for determining the a priori suitability of colourless transparent moulded polymer articles liable to be impregnated with a fluorescent material, from a set of such articles, to produce after colouring treatment coloured transparent moulded articles, without coloration defects, **characterized in that** it comprises :
a) placing in contact at least one principal surface of the colourless articles of the set with a solution of a fluorescent material for a sufficient time to allow penetration of the fluorescent material under the principal surface of the articles ;
b) irradiation of the impregnated articles by means of radiation which activates the fluorescence of the fluorescent material ; and
c) selection of the articles in the set into two sub-sets of which the first is composed of those articles of the set which show a homogeneous fluorescence of their principal surfaces under irradiation and the second is composed of those articles of the set which show a non-homogeneous fluorescence of their principal surfaces under irradiation.

2. Method according to claim 1, **characterized in that** it additionally comprises:
d) a treatment to deactivate the fluorescent property of the selected articles.

3. Method according to claim 2, **characterized in that** the deactivation treatment consists of irradiating the selected articles with UV-C radiation.

4. Method according to claim 2, **characterized in that** the deactivation treatment consists of dipping the selected articles in a bath of a chemical agent which deactivates the fluorescent material.

5. Method according to claim 4, **characterized in that** the chemical deactivation agent is a benzene alkylsulfonate.

6. Method according to any one of the preceding claims, **characterized in that** in step a) the fluorescent material penetrates under the principal surface of the articles to a depth of 0.1 to 5 µm, preferably 0.5 to 1.5 µm.

7. Method according to any one of the preceding claims, **characterized in that** step b) of irradiation is an irradiation with UV radiation.

8. Method according to any one of the preceding claims, **characterized in that** the solution of fluorescent material is an aqueous solution at a concentration of 10 to 100 ppm, preferably about 20 ppm.

9. Method according to any one of the preceding claims, **characterized in that** the solution of the fluorescent material is at a temperature higher than the glass transition temperature of the polymer material of the articles.

10. Method according to claim 9, **characterized in that** the temperature of the solution of the fluorescent material is from 85 to 98°C.

11. Method according to any one of the preceding claims, **characterized in that** the polymer material of the articles has a polymerisation shrinkage of at least 7%, preferably at least 10%.

12. Method according to claim 11, **characterized in that** the polymer material of the articles is obtained by polymerisation of a polymerizable liquid composition comprising a diethylene glycol diallyl carbonate monomer.

13. Method according to any one of the preceding claims, **characterized in that** the moulded articles have a positive optical strength.

14. Method according to any one of the preceding claims, **characterized in that** the fluorescent material is selected from the derivatives of hydrazines and aliphatic amines.

15. Method according to any one of the preceding claims, **characterized in that** the moulded articles are ophthalmic lenses.

16. Method for producing coloured ophthalmic lenses from polymer material liable to be impregnated with a fluorescent material, **characterized in that** it comprises:
a) obtaining a set of ophthalmic lenses made of colourless polymer material ;
b) placing in contact at least one principal surface of the ophthalmic lenses with a solution of a fluorescent material for a sufficient time to allow penetration of the fluorescent material under the principal surface of the ophthalmic lenses ;
c) irradiation of the ophthalmic lenses by means of radiation which activates the fluorescence of the fluorescent material ;
d) selection of the ophthalmic lenses in the set into two sub-sets of which the first is composed of the ophthalmic lenses which show a homogeneous fluorescence of their principal surfaces under irradiation and the second is composed of the ophthalmic lenses which show a non-homogeneous fluorescence of their principal surfaces under irradiation ; and
e) subjecting the ophthalmic lenses of the first sub-set to a colouring treatment.

17. Production method according to claim 16, **characterized in that** it additionally comprises, after the selection of the ophthalmic lenses and before the colouring treatment, the application of a treatment to deactivate the fluorescent material of the selected ophthalmic lenses.

18. Transparent moulded polymer article, suitable for colouring without defects, containing under one principal surface a thin impregnated layer of a deactivated fluorescent material.

19. Article according to claim 18, **characterized in that** it is an ophthalmic lens.

## Patentansprüche

1. Verfahren zur Vorabbestimmung der Eignung von ungefärbten, transparenten, mit einem fluoreszierenden Material, impregnierbaren Formartikeln aus Polymermaterial aus einer Gesamtmenge solcher Artikel, nach einer Färbebehandlung, transparente, gefärbte Formartikel ohne Färbungsfehler bereitzustellen, **dadurch gekennzeichnet, dass** es umfasst:
a) das Inberührungbringen von zumindest einer Hauptfläche der ungefärbten Artikel der Gesamtmenge mit einer Lösung eines fluoreszierenden Materials während einer Dauer, die ausreicht, um eine Penetration des fluoreszierenden Materials unter die Hauptfläche der Artikel zu ermöglichen;
b) Bestrahlen der imprägnierten Artikel mittels einer Strahlung, die die Fluoreszenz des fluoreszierenden Materials aktiviert; und
c) Sortieren der Artikel der Gesamtmenge in zwei Teilmengen, von denen eine erste aus denjenigen Artikeln der Gesamtmenge gebildet ist, die eine homogene Fluoreszenz der Hauptfläche unter Bestrahlung aufweisen, und von denen eine zweite aus denjenigen Artikeln gebildet ist, die eine nicht-homogene Fluoreszenz ihrer Hauptflächen unter Bestrahlung aufweisen.

2. Verfahren nach Anspruch 1, **dadurch gekennzeichnet, dass** es ferner umfasst:
d) eine Behandlung zur Deaktivierung der fluoreszierenden Eigenschaften der sortierten Artikel.

3. Verfahren nach Anspruch 2, **dadurch gekennzeichnet, dass** die Deaktivierungsbehandlung darin besteht, die sortierten Artikel mit einer UV-C-Strahlung zu belichten oder zu bestrahlen.

4. Verfahren nach Anspruch 2, **dadurch gekennzeichnet, dass** die Deaktivierungsbehandlung darin besteht, die sortierten Artikel in ein Bad mit einem chemischen Desaktivierungsmittel für das fluoreszierende Material zu tauchen.

5. Verfahren nach Anspruch 4, **dadurch gekennzeichnet, dass** das chemische Desaktivierungsmittel ein Benzolalkylsulfonat ist.

6. Verfahren nach einem der vorangegangenen Ansprüche, **dadurch gekennzeichnet, dass** im Schritt a) das fluoreszierende Material bis zu einer Tiefe von 0,1 bis 5 µm, bevorzugt von 0,5 bis 1,5 µm unter die Hauptfläche der Artikel dringt.

7. Verfahren nach einem der vorangegangenen Ansprüche, **dadurch gekennzeichnet, dass** der Schritt B der Bestrahlung oder Belichtung eine Belichtung oder Bestrahlung mit einer UV-Strahlung ist.

8. Verfahren nach einem der vorangegangenen Ansprüche, **dadurch gekennzeichnet, dass** die Lösung aus fluoreszierendem Material eine wäßrige Lösung mit einer Konzentration von 10 bis 100 ppm, bevorzugt von etwa 20 ppm, ist.

9. Verfahren nach einem der vorangegangenen Ansprüche, **dadurch gekennzeichnet, dass** die Lösung aus fluoreszierendem Material bei einer Temperatur vorliegt die, größer als die Glasübergangstemperatur des Polymermaterials der Artikel, ist.

10. Verfahren nach Anspruch 9, **dadurch gekennzeichnet, dass** die Temperatur der Lösung aus fluoreszierendem Material zwischen 85 und 98°C liegt.

11. Verfahren nach einem der vorangegangenen Ansprüche, **dadurch gekennzeichnet, dass** das Polymermaterial der Artikel eine Polymerisationsschrumpfung von zumindest 7%, bevorzugt von zumindest 10% aufweist.

12. Verfahren nach Anspruch 11, **dadurch gekennzeichnet, dass** das Polymermaterial der Artikel mittels Polymerisation einer flüssigen, polymerisierbaren, ein Diethylenglycoldiallylcarbonat-Monomer umfassenden Zusammensetzung, erhalten wird.

13. Verfahren nach einem der vorangegangenen Ansprüche, **dadurch gekennzeichnet, dass** die geformten Artikel eine positive optische Stärke aufweisen.

14. Verfahren nach einem der vorangegangenen Ansprüche, **dadurch gekennzeichnet, dass** das fluoreszierende Material ausgewählt ist aus aliphatischen Hydrazin- und Amin-Derivaten.

15. Verfahren nach einem der vorangegangenen Ansprüche, **dadurch gekennzeichnet, dass** die Formartikel ophthalmische Linsen sind.

16. Verfahren zur Herstellung von ophthalmischen Linsen aus gefärbtem, mittels eines fluoreszierenden Materials, impregnierbaren Polymermaterial, **dadurch gekennzeichnet, dass** es umfasst:
a) Erhalten einer Gesamtmenge von ophthalmischen Linsen aus ungefärbtem Polymermaterial;
b) Inberührungbringen von zumindest einer Hauptfläche der ophthalmischen Linsen mit einer Lösung eines fluoreszierenden Materials während einer Dauer, die ausreicht, um eine Penetration des fluoreszierenden Materials unter die Hauptfläche der ophthalmischen Linsen zu ermöglichen;
c) Belichten oder Bestrahlen der ophthalmischen Linsen mittels einer Strahlung, die die Fluoreszenz des fluoreszierenden Materials aktiviert;
d) Sortieren der ophthalmischen Linsen der Gesamtmenge in zwei Teiulmengen, von denen eine erste aus ophthalmischen Linsen gebildet ist, die eine homogene Fluoreszenz ihrer Hauptflächen unter Belichtung oder Bestrahlung aufweisen, und von denen eine zweite aus ophthalmischen Linsen gebildet ist, die eine nicht-homogene Fluoreszenz ihrer Hauptflächen unter Bestrahlung aufweisen; und
e) Behandeln der ophthalmischen Linsen der ersten Teilmenge mit einer Färbebehandlung.

17. Verfahren zur Herstellung nach Anspruch 16, **dadurch gekennzeichnet, dass** es ferner nach dem Sortieren der ophthalmischen Linsen und vor dem Bewirken der Färbebehandlung die Anwendung einer Deaktivierungsbehandlung des fluoreszierenden Materials der sortierten ophthalmischen Linsen umfasst.

18. Durchsichtiger Formartikel aus Polymermaterial, der zur fehlerfreien Färbung geeignet ist, umfassend unter einer Hauptfläche eine dünne Schicht, die mit einem deaktivierten fluoreszierenden Material imprägniert ist, aufweist.

19. Artikel nach Anspruch 18, **dadurch gekennzeichnet, dass** der Artikel eine ophthalmische Linse ist.
